Europäisches Patentamt

European Patent Office

Office européen des brevets

(11) Publication number: **0 120 287**
**A1**

## (12) EUROPEAN PATENT APPLICATION

(21) Application number: **84101808.8**

(22) Date of filing: **21.02.84**

(51) Int. Cl.³: **G 06 F 3/023**
**G 06 F 3/02**

(30) Priority: **28.02.83 US 470652**

(43) Date of publication of application:
**03.10.84 Bulletin 84/40**

(84) Designated Contracting States:
**DE FR GB IT NL SE**

(71) Applicant: **MEASUREX CORPORATION**
**One Results Way**
**Cupertino, California 95014(US)**

(72) Inventor: **Bucher, Robert**
**22588 Lazy Oak Ct.**
**Cupertino California 95014(US)**

(74) Representative: **Ebbinghaus, Dieter et ai,**
**Dr. A. v. Funer Dipl.-Ing. P. Strehl Dr. U. Schübel-Hopf**
**Dipl.-Ing. D. Ebbinghaus Dr.-Ing. D. Finck Patentanwälte**
**Mariahilfplatz 2 & 3**
**D-8000 München 90(DE)**

(54) Operator interface system and process.

(57) An operator interface system is disclosed for permitting an operator to receive information from a controlled process and permitting the operator to control the process. The system comprises: a computer system (12) coupled to receive information from and transmit information to the controlled process, a video display system (16) coupled to the computer system (12) to display information from the computer system (12) and a video keypad system (20) coupled to the computer system (12) to display information from the computer system (12) and to transmit information to the computer system (12) in response to the operator.

FIG. I

EP 0 120 287 A1

Croydon Printing Company Ltd.

_ 1 _

MEASUREX CORPORATION                    EPAB-31683.6

February 21, 1984

## OPERATOR INTERFACE   SYSTEM AND PROCESS

### The Field of the Invention

This invention concerns a system and process for an operator interface to control a controlled process.

### Description of the Prior Art

Computer based process control systems are often used to control industrial processes. Such systems generally include an array of sensors to gather information from various points in the controlled process, a computer control system to receive information from the sensors and to control of the process, and an operator station. The operator station or operator interface system provides information to the operator about the status of the system and permits the operator to control the controlled process. A typical operator station is taught in U.S. Patent 3 869 892 titled "Feed Forward Gauge Control System for a Rolling Mill", issued March 11, 1975. Computer based process control systems and their included operator stations are presently used for many types of industrial process control. For example, U.S. Patent 4 069 675 titled "Method of Optimizing the Performance of a Multi-Unit Power Plant" issued January 24, 1978, and U.S. Patent 4 098 641 titled "Method For the On-Line Control of The Opacity of a Paper Sheet" issued July 4, 1978 teach examples of such control systems.

A conventional operator interface system generally includes a video display screen and a data entry panel. The video display screen is a cathode ray tube which displays information to the operator concerning the operation of the process which is controlled, such as information on the quality of the product, the status of alarm limits which indicate whether the product is outside a specification, a summary of production information, and statistical parameters concerning the process. The data entry panel includes a plurality of labeled buttons which are each dedicated to a specific function. For example, ten of the buttons are generally dedicated, one to each number from zero to nine to permit the operator to enter numerical information. As another example, one of the buttons could be designated "production summary" "so that by pressing said button the operator could call up on the video display screen information concerning the amount of production in the controlled process. As another example, if the controlled process were a paper mill, a button could be labelled "headbox control" and dedicated to permitting the operator to call up information concerning the headbox. Thus, it can be seen that the conventional data entry panel is generally specific to the particular type of process with which the control system is being used. Furthermore, the number of buttons comprising the data entry panel is limited to the area available on the operator control system.

It is presently desired to have a computer-based process control system which is not specific to any particular process but rather can be easily configured for use with any of a wide variety of controlled processes.Furthermore, it is desired to permit an operator the ability to design for himself certain aspects of the control system in the field. The present operator interface system satisfies these objectives. For example, the present operator interface system has a keyboard which is variable by the operator and is not restricted to any particular controlled process. Moreover, the present system permits the operator to design certain aspects of the control system himself in the field.

## Objects of the Invention

An object of the present invention is to provide a system and process to permit an operator to design certain aspects of a control system in the field.

Another object of the present invention is to provide an operator interface system which is adaptable for use with a wide variety of controlled processes.

Further objects and advantages of the present invention may be ascertained by reference to the specification and drawings which are offered by way of example and not in limitation of the invention which is defined by the claims and equivalents thereto.

## Brief Description of the Drawings

Fig. 1     is a schematic illustration of the present system,

Fig. 2      is a schematic illustration of one part of
            the present system,

Fig. 3      is a schematic illustration of a pulp and paper
            mill,

Fig. 4
and 5       are schematic illustrations of one part of the
            present process as utilized in a particular
            application.


Detailed Description of the Preferred Embodiment

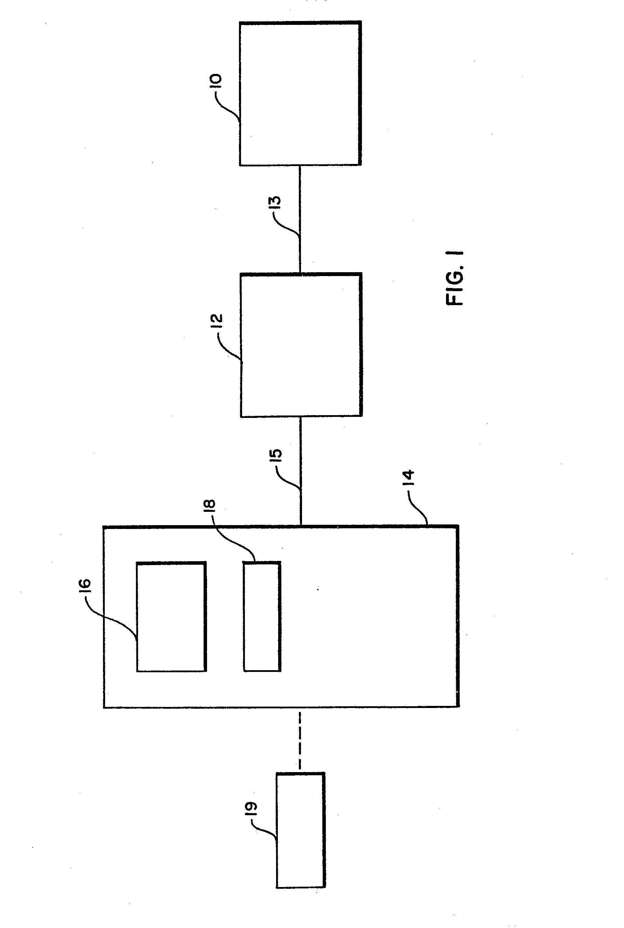

Fig. 1 schematically illustrates the present system as it is utilized with a controlled process 10. The controlled process 10 can be simple or complex, and exemplary controlled processes include systems of boilers, paper and pulp making systems, metal manufacturing systems and power plant systems. The controlled process 10 is coupled to a computer system 12 by line 13. Depending upon the complexity of the controlled process, the computer system 12 can comprise multiple, distributed computers or a single computer and the line 13 can represent many or few electrical connections. The computer system 12 is coupled to operator station 14 by line 15. If the computer system 12 comprises multiple computers, line 15 can represent a number of electrical connections. The operator station 14 and computer system 12 together comprise an operator interface system. In practice, the computer system or selected parts of the computer system can be housed in the operator station 14 or can be housed elsewhere.

The operator station 14 includes a video display system 16 and a key system 18. The video display system 16 includes a video display capable of displaying information to an operator viewing the operator station 14. The video display system 16 further includes electronic components housed in the operator station 14. Likewise, the key system 18 includes components which display information to the operator as well as components housed in the operator station 14. A conventional ASCII keyboard 19 can be coupled to the operator station 14 to permit entry of certain information.

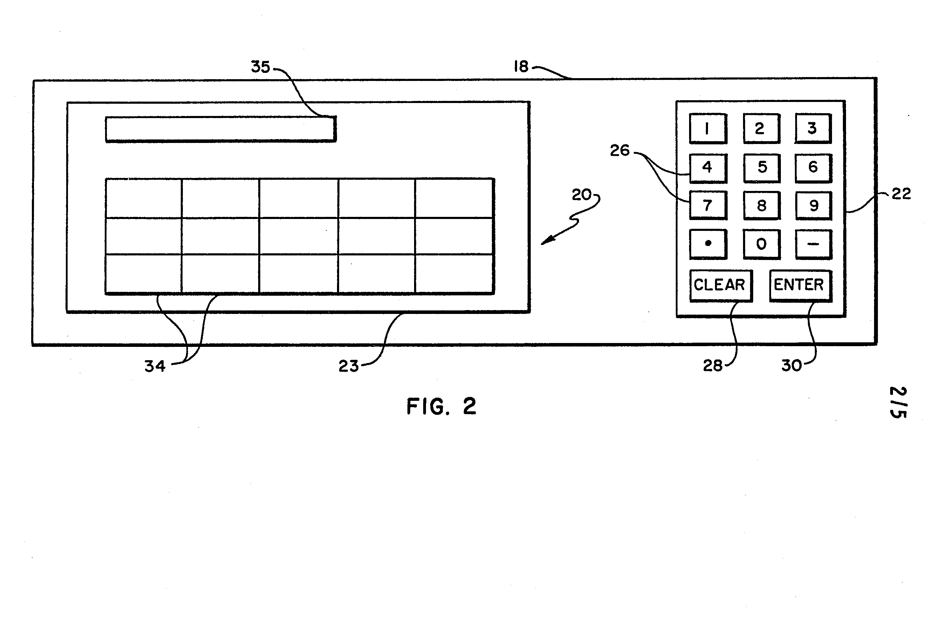

Fig. 2 illustrates further details of the key system 18, which includes a video key pad system 20 and a data entry panel 22. The video keypad system 20 includes a touch sensitive screen 23 as well as supporting electronics, not shown. The video keypad system 20 displays information from the computer system 12 to an operator on the screen 23, and an operator can enter information onto the computer system 12 by touching particular parts of the touch sensitive screen 23. In other words, the video keyboard system 20 displays information in much the way a conventional cathode ray tube display does so, while the system also has the ability to accept the input of information as does a conventional keyboard. An example of a touch sensitive screen 23 is an "Infotouch Display" model 1780A manufactured by the John Fluke Manufacturing Company Inc.. The touch sensitive screen 23 can display information in the form of an array of fifteen keys 34, each of which can be actuated by an operator by touching the screen. The screen 23 can also display information in location 35.

The data entry panel 22 is conventional and is a means for the operator to enter numerical data into the computer system 12. The data entry panel 22 comprises twelve keys 26 for entering numbers, a "clear" key 28 for clearing erroneously entered information, and an "enter" key 30 for entering information which has been punched into the keys 26.

The video display system 16 is conventional and is capable of displaying information of various types to the operator. For example, the video display can display numerical data on such subjects as the quality of material being produced in the control process 10, various alarm limits concerning the process, and information concerning the production of the process. The video display system 16 is also capable of displaying graphical information showing various characteristics of products produced in the controlled process as well as diagrams showing various features of the process.

As will be discussed hereinafter, the operator interface system need not be designed specifically for any particular control process; rather, an operator has the ability to modify the operator interface system so that it can be used with a selected control process.

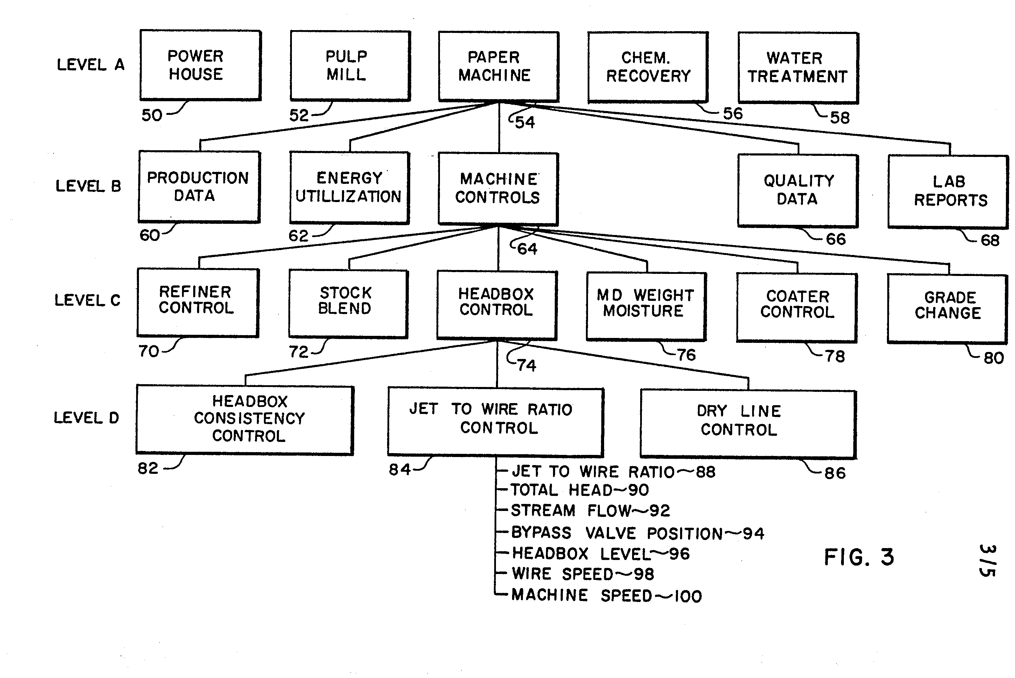

After the operator interface system has been installed on a controlled process the operator must configure the operator interface system, i.e., tailor the system to the controlled process. To understand the configuration process reference should be made to Fig. 3 which schematically illustrates an exemplary controlled process.

In this case the exemplary process is a pulp and paper mill which has been divided into a hierarchy of four levels A, B, C and D. Each level is divided into a plurality or areas. Level A is divided into five areas, each corresponding to a major system in the mill, that is, a power house 50, a pulp mill 52, paper machines 54, chemical recovery systems 56, and a water treatment system 58. According to Fig. 3 the paper machines can be conceptually divided into a number of areas as shown in level B. Of course, the other areas in level A, i.e., the power house, etc., can also be divided into a number of areas; however for simplicity, only the subareas of the paper machine are shown in Fig. 3.

Each of the areas in level B can be divided into subareas, and for simplicity only the subareas of machine controls 64 are shown in level C. According to Fig. 3, headbox control 74 is shown as divided into a plurality of subareas in level D. There are a plurality of control loops associated with each of the areas in level D, and for simplicity only the control loops associated with the jet to wire ratio control are shown. The control loops shown in Fig. 3 are jet to wire ratio, total head, stream flow, bypass valve position, headbox level, wire speed, and machine speed. Further information concerning jet to wire ratio control 84 can be found in published documents such as U.S. Patent 3 886 036 titled "Method of Controlling Dryer Limited Paper Machine" issued May 27, 1975.

The operation of the operator interface system comprises two aspects; the first aspect being display and keypad building and the second running the system. These two aspects will be discussed separately.

Display and Keypad Building

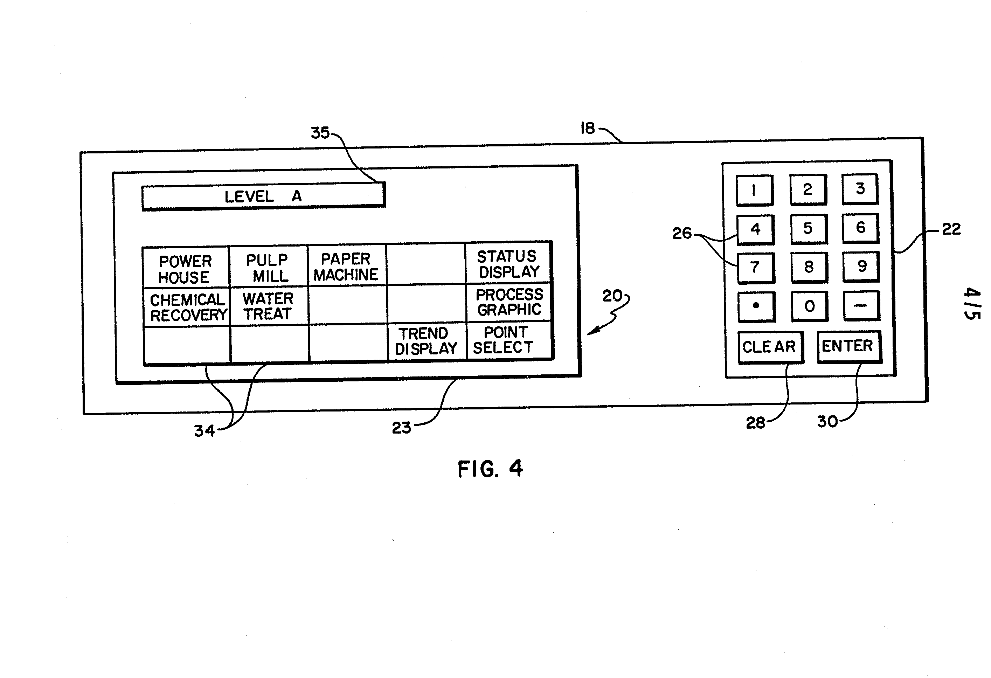

When the operator interface system is first installed on a process which is to be controlled, the system is not configured for the particular process and thus the operator is free to build displays and keypads to correspond to the process which is to be controlled. The first step of the building process is to create a conceptual hierarchy of levels and areas within the controlled process. An example of such a conceptual hierarchy is shown in Fig. 3. After the hierarchy has been conceptualized, pertinent information concerning the hierarchy is entered into the interface system by the operator. This is accomplished through the keypad system 20 and the ASCII keyboard 19. Specifically, information is entered concerning the first level of the hierarchy and each area therein, and thereafter for each additional level and area in turn. For example, with reference to Fig. 3, the operator first types on the ASCII keyboard 19 information concerning each of the five areas 50-58 and via the keyboard 19 identifies a specific key of the keypad with each area so that the information is entered into the keypad system 20. That is, he establishes one key titled "power house" to correspond to area 50, so that when the keypad corresponding to level A is displayed, the key in the upper line and leftmost row of the keypad displays the words "power house". Likewise, the key next to the right thereof is configured to display the words "pulp mill" and so forth as shown in Fig. 4.

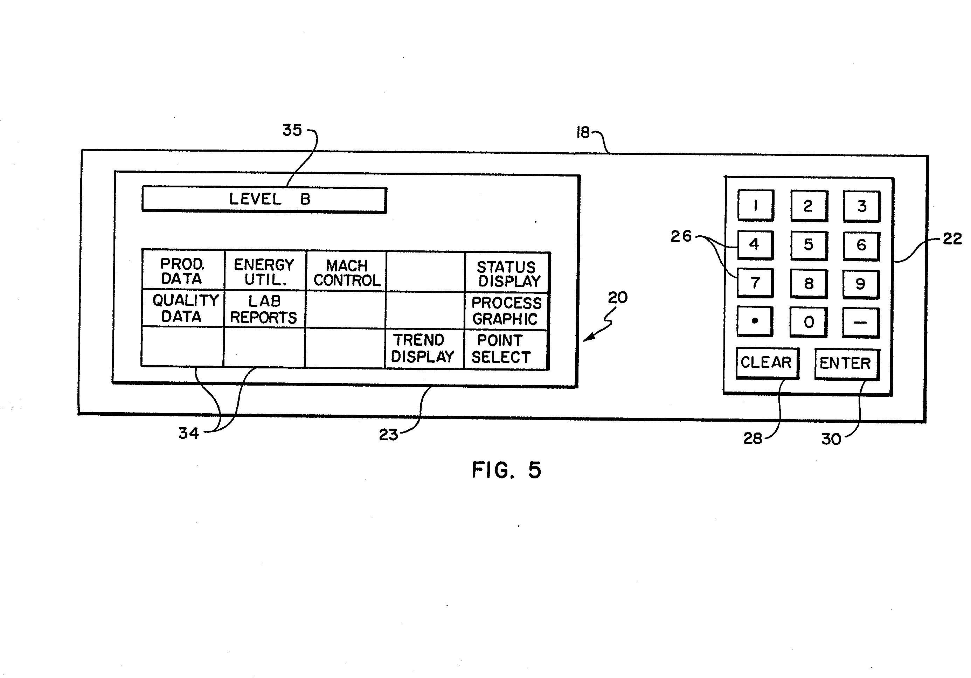

After the first keypad has been established as discussed above, then a second keypad is constructed to correspond to level B. In the case of Fig. 3, there will be five keypads corresponding to level B, one to correspond with each area 50-58. With respect to the system shown in Fig. 3, for example, the keypad corresponding to areas 60-68 will be labeled "production data" and so forth as shown in Fig. 5. The operator will link the keypad concerning area 60-68 to the "paper machine" area 54 of level A together by using the ASCII keyboard 19 to answer questions on the screen 23.

After the five keypads for level B have been constructed, then the operator likewise constructs the keypads for level C and so forth for all the levels of the hierarchy for the process under consideration.

After keypads have been constructed for each of the levels of the hierarchy, the operator then constructs keypads for each control loop associated with each area of the lowermost levels. With reference to Fig. 3, the operator constructs keypads for each control loop 88-100. As is the case with the keypads for the areas, keypads for the control loops comprise one key which corresponds to each loop.

After the keypads concerning the control loops have been entered into the interface system, status and trend displays are built. Status displays are graphic displays which can be displayed on the video display system to indicate the condition or status of a particular element of the controlled process. For example, with reference to the paper mill system shown in Fig. 3, a status display concerning jet to wire ratio 88, for example, could display in diagram form the set point value for the ratio, a high level and a low level alarm limit, and the actual value of the ratio at a given time. On the other hand, trend displays are graphical depictions of changes throughout a given period of time of a particular parameter.

The operator can build one status display and one trend display to correspond to any selected control parameter. Status displays and trend displays are built in much the same manner as the overall hierarchy of the control process as discussed above. However, in the case of status and trend displays, the operator must not only configure the various keypads in a hierarchical relationship, but he also must develop the video display of each status and trend display to correspond to each key comprising a particular keypad. This is done so that during the running of the system the operator could for example press a key titled "jet to wire ratio" and have displayed on the video display a status display for that parameter. This is accomplished by using the key system 18 and display system 16 which have "skeletons" or elements of standard displays stored. The operator uses the ASCII keyboard 19 to call up selected "skeletons" and arrange them relative to one another to generate complete video displays.

After the operator has created status and trend displays he then creates mimic displays which are schematic illustrations of various elements of the overall control process. The operator builds a mimic of selected portions of the control process on the video display by calling up various building blocks or "skeletons" and arranging them as he chooses using the ASCII keyboard 19 thereby building a mimic of the system piece by piece. Thereafter, he creates tags on various parts of the system and identifies keys which correspond thereto. He then identifies with each key and corresponding tag a status display or trend display already developed. By using this correspondence he can call up a mimic display of the process and locate a particular part thereof for which he might want a status or trend display. Thereafter he can call up the desired display by touching a particular key.

Running the System

After the various displays and keypads have been built as described above, the operator then is able to operate the system to obtain information through the operator interface system and control the process. For example, if the operator wished to determine what control loops are associated with the areas of level D of the system shown in Fig. 3, he

- 11 -

would perform the following steps:

First, the keypad system 20 would display information concerning the highest level of the controlled process. In addition to nine keys identifying areas of the level shown, the screen also displays six additional keys the functions of which will be discussed hereinafter. In this example, the display is shown in Fig. 4, i.e., keys corresponding to the power house 50, pulp mill 52, etc. of level A are displayed and in location 35 the level is identified. The operator would then choose one of the five areas about which he wanted further information, and he would then touch the keypad 32 on the key corresponding to his selection and the "point select" key. In our example, he would select information concerning the paper machine key 54 by touching the appropriately labeled key and the "point select" key. When he had done so, the display on the keypad system would change to that shown in Fig. 5, which corresponds to the areas in level B. The operator could then proceed to the next lower level by touching the key labeled "machine controls" and the "point select" key. Then the keypad would change to display keys corresponding to level C to permit the operator then to press the key for jet to wire ratio 84. When he had done so, the keypad display would show keys corresponding to the control loops 88 - 100.

Once the operator has reached the desired level, he selects the desired display type by touching the key titled "status display". Then the image on the video display changes from its prior condition to a status display showing the status of the selected control loop. If, on the other hand, the operator wished to obtain a trend display or process graphics, he would do so by simply touching the appropiate key.

If the operator wishes to have information concerning and control of a particular control loop, he moves from the lowest level in the hierarchy to the control loops by touching the key for the selected loop plus the key labeled "point select". When the "point select " key is activated, the video keypad updates to display a key set which has keys labeled with the tag names of the control loops assigned to the presently selected area. In the example shown in Fig. 3, the keys would be labeled "jet to wire ratio" etc. to correspond to loops 88 - 100. When the keypad for the desired level is displayed, the operator touches the key corresponding to the loop he wishes to control but he does not touch the "point select" key. The video display will display a controller face plate showing the actual value of the parameter in question and the setpoint of the parameter. The operator can then alter the set point if he wishes by introducing information in numerical form via the data entry panel 22 and then pressing the "enter" key.

In the discussion above, the ability of the operator to move from a higher level to a lower has been discussed. On the other hand, if the operator wishes to move from a lower level to a higher level, he touches a "home" key, not shown. Whe he does so, the video keypad updates to the keypad corresponding to the highest level in the system. In the case of the example in Fig. 3, the level including power house 50, pulp mill 52, etc. would be displayed.

0120287

CLAIMS

1. An operator interface system, particularly for permitting an operator to receive information from a controlled process and permitting the operator to control the process, c h a r a c t e r i z e d   by
   a) a computer system (12) coupled to receive information from and transmit information to the controlled process,
   b) a video display system (16) coupled to the computer system to display information from the computer system;
   c) a video keypad system (20) coupled to the computer system (12) to display information from the computer system (12) and to transmit information to the computer system (12) in response to the operator.

2. An operator interface system comprising:
   a) a computer system (12),
   b) a video display (16) coupled to the computer system (12) to display information from the computer system (12),
   c) a video keypad system (20) coupled to the computer system (12) to display information from the computer system (12) and to transmit information to the computer system (12) in response to the operator.

3. A system according to claim 1, c h a r a c t e r i - z e d  in that the video display system (16) is capable of receiving information from the operator and transmitting the information to the computer (12).

4. A system according to claim 1 or 2, c h a r a c t e -

r i z e d  in that the video display system (16) includes a video display capable of displaying information
in the form of diagrams, numerical data, and graphs.

5. A system according to claim 4, c h a r a c t e r i -
z e d  in that the video keypad system (20) is capable
of displaying information corresponding  to the information displayed on the video display (19).

6. A system according to claim 1 or 2, c h a r a c t e -
r i z e d   in that the video keypad system (20) includes a video keyboard (18) to display information.

7. A  system according to claim 6, c h a r a c t e r i -
z e d  in that said video keypad system (20) is constructed and arranged so that said video keyboard (18)
is capable of displaying a plurality of keypads.

8. A system according to claim 7, c h a r a c t e r i -
z e d   in that each of said keypads has a predetermined correspondence to information displayed on a video
display (19) which forms part of said video display
system (16).

9. A process for controlling a controlled process by means
of an operator interface system which includes a computer system (12), a video display system (16) and a vi-
deo  keypad system (20), c h a r a c t e r i z e d by
a) portitioning the controlled process into a hierarchy
   of levels (A, B, C, D),
b) identifying a keypad (35) with each level (A, B, C,
   D) and
c) entering each of said keypads (35) in the operator
   interface system.

10. A process according to claim 9, c h a r a c t e r i - z e d by the steps of:

a) partitioning at least one of said levels (A, B, C, D) into a plurality of areas;

b) indentifying with each area an area key (34) included in at least one of said keypads; and

c) entering each of said area keys in the operator interface system.

11. A process according to claim 10, c h a r a c t e r i - z e d by

a) identifying a plurality of control loops (Fig. 3) with at least one of said areas;

b) identifying a loop key with each said control loop; and

c) entering each of said loop keys in the operator interface system.

12. A process according to claim 11, c h a r a c t e r i - z e d in that at least one video display is constructed to correspond to at least one of said control loops.

13. A process for operating an operator interface system which includes a computer system (12), a video display system (16) including a video display (19), and a video keypad system (20) which includes a touch sensitive video keyboard (18), the process c h a r a c t e r i - z e d by

a) causing a first set of items of information to be displayed on the video keyboard (18);

b) touching a portion of the keyboard corresponding to a selected item of information to cause the keyboard (18) to update to display a second set of items of information.

14. A process according to claim 13, c h a r a c t e r i - z e d  in that

a) information is displayed on the video display (19) before a portion of the keyboard (18) is touched; and

b) when the keyboard (18) is touched the information displayed on the video display (19) changes.

FIG. I

1/5

FIG. 2

LEVEL A

| POWER HOUSE | PULP MILL | PAPER MACHINE | CHEM. RECOVERY | WATER TREATMENT |
|---|---|---|---|---|

50     52     54     56     58

LEVEL B

| PRODUCTION DATA | ENERGY UTILLIZATION | MACHINE CONTROLS | QUALITY DATA | LAB REPORTS |
|---|---|---|---|---|

60     62     64     66     68

LEVEL C

| REFINER CONTROL | STOCK BLEND | HEADBOX CONTROL | MD WEIGHT MOISTURE | COATER CONTROL | GRADE CHANGE |
|---|---|---|---|---|---|

70     72     74     76     78     80

LEVEL D

| HEADBOX CONSISTENCY CONTROL | JET TO WIRE RATIO CONTROL | DRY LINE CONTROL |
|---|---|---|

82     84     86

— JET TO WIRE RATIO ~ 88
— TOTAL HEAD ~ 90
— STREAM FLOW ~ 92
— BYPASS VALVE POSITION ~ 94
— HEADBOX LEVEL ~ 96
— WIRE SPEED ~ 98
— MACHINE SPEED ~ 100

FIG. 3

35

18

LEVEL A

| POWER HOUSE | PULP MILL | PAPER MACHINE | | STATUS DISPLAY |
|---|---|---|---|---|
| CHEMICAL RECOVERY | WATER TREAT | | | PROCESS GRAPHIC |
| | | | TREND DISPLAY | POINT SELECT |

20

34

23

26

22

| 1 | 2 | 3 |
|---|---|---|
| 4 | 5 | 6 |
| 7 | 8 | 9 |
| . | 0 | — |

| CLEAR | ENTER |
|---|---|

28

30

4/5

FIG. 4

84 101 808.8
EPAB-31683.6

0120287

FIG. 5

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | THE BELL SYSTEM TECHNICAL JOURNAL, vol. 62, no. 1, part 1, January 1983, pages 121-144, American Telephone and Telegraph Company, Murrav Hill, New Jersey, US; D.L. BAYER et al.: "An experimental teleterminal - The software strategy" * Figures 1-3,13; page 128, lines 4-27; page 129, paragraph 3.2.2 - page 130, line 10; page 141, last paragraph - page 143, line 11 * | 1-3,6-8 | G 06 F 3/023<br>G 06 F 3/02 |
| Y | IDEM | 4,5,9-14 | |
| X | FR-A-2 431 153 (REGIE NATIONALE DES USINES RENAULT) * Figures 1-3; page 1; page 6, line 7 - page 8, line 24 * | 1-3,6,7,9-14 | **TECHNICAL FIELDS SEARCHED (Int. Cl. ³)** |
| Y | | 4,5,8 | G 06 F<br>H 03 K |
| Y | DISPLAYS, vol. 2, no. 1, April 1980, pages 47-55, IPC Business Press Ltd., Surrey, GB; W. GARDNER: "Interactive display techniques for the Tektronix 4027 colour terminal" * Figure 3; page 48, paragraph "Split screen"; figures 6,12,13; page 52; page 54, right-hand column, lines 23-25 "Graphs" * | 4,5,8-14 | |

-/-

The present search report has been drawn up for all claims

| Place of search | Date of completion of the search | Examiner |
|---|---|---|
| THE HAGUE | 08-06-1984 | BECKER K.H. |

0120287
Application number

**EUROPEAN SEARCH REPORT**

EP 84 10 1808

European Patent
Office

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | IDEM | 1,2,3 9-14 | |
| A | DE-A-3 223 176 (HONEYWELL INC.) * Claim; page 10, line 25 - page 14, line 29; figures 2-5 * | 1-5 | |
| A | SID INT. SYMPOSIUM DIGEST OF TECHNICAL PAPERS, 1978, pages 84-85; E.L. HERRON: "10.3/3.20 P.M.: Two types of system control with an interactive display device" * Whole article * | 1-3,6, 7,9,10 ,13,14 | |
| A | US-A-3 200 375 (HUGHES AIRCRAFT CO.)   * Column 1, line 11 - column 2, line 22; column 3, lines 38-50; claim 1; figure 1 * | 1-3,6, 7,9,10 ,13 | **TECHNICAL FIELDS SEARCHED (Int. Cl. ³)** |

The present search report has been drawn up for all claims

| Place of search | Date of completion of the search | Examiner |
|---|---|---|
| THE HAGUE | 08-06-1984 | BECKER K.H. |